# EUROPÄISCHE PATENTANMELDUNG

(11) **EP 3 910 253 A1**
(43) Veröffentlichungstag der Anmeldung: **17.11.2021**
(21) Anmeldenummer: 21172818.3
(22) Anmeldetag: 07.05.2021
(51) Int. Cl.: F24F 6/00, B60L 53/30, H05K 7/20, B60H 3/02, G05D 22/02, H05K 5/02

(54) **ENTFEUCHTER-EINRICHTUNG UND EINE DIESE AUFWEISENDE LADESTATION**

(30) Priorität: 13.05.2020 DE 102020112925
(71) Anmelder: Dr.Ing. h.c. F. Porsche Aktiengesellschaft, 70435 Stuttgart (DE)
(72) Erfinder: HEYNE, Dr. Raoul, 75446 Wiernsheim (DE); Joslowski, Florian, 70771 Leinfelden-Echterdingen (DE); Bohner, Matthias, 70376 Stuttgart (DE)
(74) Vertreter: Sturm, Christoph

(57) **Zusammenfassung**

Es wird eine Entfeuchter-Einrichtung (1) bereitgestellt, aufweisend ein elektrothermisches Wandler-Element (10);
einen Auffangbehälter (11), welcher unterhalb des elektrothermischen Wandler-Elements (10) angeordnet ist zum Auffangen von sich daran bildenden Kondensats, wobei der Auffangbehälter (11) einen Ablauf (12) aufweist, durch den das Kondensat aus dem Auffangbehälter (11) aus der Entfeuchter-Einrichtung (1) herausgeleitet werden kann. Ferner wird erfindungsgemäß eine Ladestation (4) mit der Entfeuchter-Einrichtung (1) bereitgestellt. Ferner wird eine Ladestation zum Laden eines Elektrofahrzeugs bereitgestellt, welche die Entfeuchter-Einrichtung aufweist.

## Beschreibung

Die vorliegende Erfindung betrifft eine Entfeuchter-Einrichtung und eine diese aufweisende Ladestation, insbesondere eine Ladestation zum Laden von Elektrofahrzeugen.

Die verschiedenen Ladestationen, die weltweit im Einsatz sind, müssen den klimatischen Bedingungen standhalten. Dabei können hohe Luftfeuchtigkeiten und extreme Temperaturen in den verschiedenen Regionen der Erde auftreten. Auch beim Aufbau können die Komponenten der Ladestation durch die vorherrschenden klimatischen Bedingungen negativ beeinflusst werden.

In der neuen ISO-Norm 61851-1:2017 sind die Rahmenbedingungen für einen sogenannten "damp heat functional test" (Feuchte-Wärme-Funktionalprüfung) für konduktive Ladesysteme für Elektrofahrzeuge definiert, den entsprechend zertifizierte Ladesysteme bestehen müssen. Darin wird beschrieben, dass Ladesäulen bei hohen Temperaturzyklen (25°C bis 40°C) und einer hohen Luftfeuchte (95 %) für längere Zeitzyklen von mehreren Tagen betrieben werden müssen. Durch diese Temperaturschwankungen und die hohe Luftfeuchte kommt es zu Kondensationen innerhalb der Ladesäulen bzw. Ladestationen, vor allem bei den Kühlplatten der Leistungselektronik bei flüssig gekühlten Systemen. Diese Feuchte führt dazu, dass Komponenten schneller korrodieren und, dass sich Kondenswasser im Sockel sammelt, welches als Leckage detektiert werden kann. Weiter trägt die Feuchte dazu bei, dass die Isolation sinkt und dadurch die Isolationswerte unter die Normvorgaben absinken können. Dieser Umstand ist besonders problematisch, da dadurch Ladesäulen bzw. Ladestationen nicht mehr einsatzfähig/betriebsbereit sein können und es ferner zu Kurzschlüssen kommen kann, welche die elektrischen Bauteile zerstören können.

Die Leistungselektronik von heutzutage eingesetzten Ladesäulen/Ladestationen wird aktiv gekühlt, wobei die Kühlvorrichtung am gleichen Ort wie die Leistungselektronik, also etwa in der Ladesäule, oder ausgelagert als zentrale Kühlvorrichtung vorliegen kann, welche für die Kühlung mehrerer Ladesäulen zuständig sein kann. Mit stetig steigenden Ladeströmen wird auch häufig eine Kühlung des Ladekabels vorgenommen. Die gekühlten Teile bieten bei Temperaturerhöhungen der Umgebung und einer hohen Luftfeuchte erste Angriffsflächen für eine einsetzende Kondensation. Alternativ gibt es auch Ladesysteme, die auf eine Flüssigkühlung verzichten und versuchen, mit einer Luftkühlung auszukommen.

Aus Druckschrift WO 2016/198088 A1 ist beispielsweise ein Entfeuchter für einen Schaltschrank bekannt, in welchem ein Peltier-Element zum Einsatz kommt. Eine mögliche Vereisung (Vereisungsproblem) wird durch Umpolung der Stromversorgung des Peltier-Elements verhindert infolge der Feststellung einer Vereisungsbedingung für den Kühlkörper. Dadurch erwärmt sich die Kaltseite des Peltier-Elements und die Warmseite erkaltet.

Druckschrift DE 10 2018 103 706 A1 offenbart ein Ladesystem mit einem integrierten Kühlmittelspeicher. Im oberen Teil der Ladestation sind Lüfter angeordnet, welche für Luftumwälzung im Bereich des Kondensators sorgen, in dem das gasförmige, überhitzte Kältemittel abgekühlt wird. Im oberen Bereich der Ladestation ist ferner ein Flüssigkeit-Luft-Wärmetauscher der Leistungselektronik vorgesehen, mittels dessen der durch die Elektronik im Gehäuseinneren erwärmten Luft Wärme entzogen und auf das Kältemittel übertragen wird.

Druckschrift EP 3 257 701 A2 offenbart eine Ladesäule für ein Elektroauto mit einer "Dockingstation" zur Aufnahme des Ladesteckers bei Nichtbenutzung, in der ein Peltier-Element zur Kühlung des Steckers angeordnet ist.

Aus Druckschrift DE 10 2015 112 347 A1 ist ferner eine Ladestation bekannt mit einem Peltier-Element zur Flüssigkeitskühlung.

Vor dem Hintergrund des Standes der Technik kann die Aufgabe der vorliegenden Erfindung darin gesehen werden, eine Ladestation bereitzustellen, deren Komponenten keine Probleme mit Kondenswasser haben. Insbesondere soll Kondenswasser nicht dazu führen, dass die Isolationsmessungen unzulässige Werte ergeben und dadurch die Ladestation außer Betrieb gesetzt wird.

Die Aufgabe wird mittels einer Entfeuchter-Einrichtung, insbesondere für die Verwendung in einer Ladestation, sowie einer die entsprechende Entfeuchter-Einrichtung aufweisenden Ladestation gemäß den unabhängigen Patentansprüchen gelöst. Vorteilhafte

Ausgestaltungen ergeben sich aus den abhängigen Patentansprüchen.

Im Rahmen dieser Beschreibung kann unter der Bezeichnung Ladestation sowohl eine Ladesäule verstanden werden, in welcher die Leistungselektronik enthalten ist, als auch eine gesonderte Einheit, welche die Leistungselektronik aufweist und die mit mindestens einer Ladesäule elektrisch gekoppelt ist. Im letzteren Fall kann die Ladesäule einen reinen Ladepunkt bereitstellen, und beispielsweise mit einer "Charge Box" (Ladebox) elektrisch gekoppelt sein, in welcher die Leistungselektronik enthalten ist und welche somit die Energiewandlung und Energiebereitstellung für die mindestens eine Ladesäule übernimmt.

Erfindungsgemäß wird eine Entfeuchter-Einrichtung bereitgestellt, aufweisend ein elektrothermisches Wandler-Element und einen Auffangbehälter, welcher unterhalb des elektrothermischen Wandler-Elements angeordnet ist, zum Auffangen von sich daran bildendem Kondensat (Kondenswasser). Der Auffangbehälter weist einen Ablauf auf, durch den das Kondensat aus dem Auffangbehälter aus der Entfeuchter-Einrichtung herausgeleitet werden kann. Bei dem elektrothermischen Wandler-Element kann es sich insbesondere um ein Peltier-Element handeln, welches im Betrieb, also bei angelegter Spannung, eine Kaltseite und eine Warmseite aufweist. Der durch das Peltier-Element fließende Strom bewirkt, dass eine Seite des Elements abkühlt (Kaltseite) während sich die andere Seite erwärmt (Warmseite). Ein Peltier-Element hat den Vorteil, dass es wenig Strom und Spannung und somit wenig Energie benötigt. Weiter hat es keine bewegten Teile, wodurch es ohne mechanischen Verschleiß arbeitet und keinen mechanischen Schaden nehmen kann und auch keinen Lärm erzeugt. Auf diese Weise kann die Luft hocheffizient entfeuchtet werden.

Im Betrieb der Entfeuchter-Einrichtung bildet sich Kondensat an der Kaltseite des Peltier-Elements, welche üblicherweise kälter ist als die lokale Umgebung, wodurch die Luft in der lokalen Umgebung des Peltier-Elements entfeuchtet werden kann. Das sich an der Oberfläche der Kaltseite bildende Kondenswasser fließt an dieser herunter und sammelt sich im Auffangbehälter. Der Auffangbehälter kann insbesondere unter der Kaltseite des Peltier-Elements angeordnet sein. Das angesammelte Kondenswasser kann durch den Ablauf aus der Entfeuchter-Einrichtung abgeführt werden.

Gemäß weiteren Ausführungsformen der Entfeuchter-Einrichtung kann diese ferner eine Trägerplatte aufweisen, auf welcher ein Halterahmen angeordnet ist, wobei das elektrothermische Wandler-Element in den Halterahmen eingesetzt ist. In dem Halterahmen können elektrische Kontakte angeordnet sein, welche bei Einsetzen des elektrothermischen Wandler-Elements dieses mit Strom versorgen. Die elektrischen Kontakte am Halterahmen können wiederum elektrisch mit Anschlusskontakten verbunden sein, welche gesondert auf der Trägerplatte angeordnet sind. Bevorzugt kann zwischen dem Halterahmen und der Trägerplatte eine Hochspannungsisolierschicht angeordnet sein, beispielsweise eine Hochspannungsisolierfolie, sodass der Halterahmen und das darin eingesetzte elektrothermische Wandler-Element gegenüber der Trägerplatte elektrisch isoliert sind. Dieses Merkmal ist insbesondere dann zweckdienlich, wenn die Trägerplatte mit ihrer Rückseite (die dem Halterahmen gegenüberliegende Seite der Trägerplatte) an ein anderes Element in der Ladestation befestigt wird, beispielsweise an eine Kühlplatte der Leistungselektronik. In der Trägerplatte können ferner Öffnungen vorgesehen sein, so dass diese an ein anderes Element innerhalb einer Ladestation befestigt werden kann, beispielsweise mittels (mindestens) einer Schraubverbindung.

Gemäß weiteren Ausführungsformen der Entfeuchter-Einrichtung kann die Oberfläche des elektrothermischen Wandler-Elements, welche der Trägerplatte abgewendet ist (und somit der Kondensatbildung zugängig ist), eine dreidimensional strukturierte Oberfläche aufweisen. Die dreidimensional strukturierte Oberfläche kann beispielsweise eine Kegel-, eine Pyramiden-, eine Stäbchenstruktur oder eine allgemein geriffelte Struktur aufweisen. Die dreidimensional strukturierte Oberfläche dient der Vergrößerung der Oberfläche, um der Kondensatbildung eine größere Angriffsfläche zu bieten. Bei der dreidimensional strukturierten Oberfläche des elektrothermischen Wandler-Elements kann es sich um die Oberfläche der Kaltseite des elektrothermischen Wandler-Elements handeln oder um die Oberfläche eines wärmeleitend mit der Kälteseite des elektrothermischen Wandler-Elements gekoppelten Kondensationskörpers handeln.

Gemäß weiteren Ausführungsformen kann die Entfeuchter-Einrichtung ferner einen Lüfter aufweisen, welcher derart angeordnet ist, dass im Betrieb der Entfeuchter-Einrichtung ein von diesem erzeugter (ausgehender) Luftstrom die von der Trägerplatte abgewendete Oberfläche des elektrothermischen Wandler-Elements (Kaltseite) anbläst. Darunter kann auch gemeint sein, dass der vom Lüfter erzeugte Luftstrom einen auf der Kaltseite angebrachten Kondensationskörper anbläst. Beispielsweise kann der erzeugte Luftstrom die von der Trägerplatte abgewendete Oberfläche des elektrothermischen Wandler-Elements auf der dreidimensional strukturierten Oberfläche derart anblasen, dass eine Vereisung verhindert, in reduziertem Maße erfolgen kann oder abgebaut werden kann. Durch Anblasen der Kaltseite des elektrothermischen Wandler-Elements bzw. des daran angebrachten Kondensationskörpers kann eine Effizienzsteigerung hinsichtlich der Luftentfeuchtung erreicht werden. Der Lüfter kann beispielsweise mittels Schraubverbindungen an dem elektrothermischen Wandler-Element anliegend an der Trägerplatte befestigt sein. Mittels des Lüfters kann zusätzlich auch einer Vereisung der Kaltseite entgegengewirkt werden. Insbesondere bei hoher Lüfterleistung und warmen Innenraum der Ladestation kann durch den vom Lüfter ausgehenden Luftstrom die Kaltseite erwärmt werden und so einer Vereisung entgegengewirkt oder diese wieder abgebaut werden.

Gemäß weiteren Ausführungsformen der Entfeuchter-Einrichtung kann diese ein Wärmeleitpad aufweisen, welches im Bereich des elektrothermischen Wandler-Elements auf einer diesem abgewandten Oberfläche der Trägerplatte (d.h. auf dessen Rückseite) angeordnet ist. Das Wärmeleitpad kann für einen verbesserten thermischen Kontakt zwischen der Entfeuchter-Einrichtung und einem anderen Element innerhalb der Ladestation verwendet werden, beispielsweise zwischen der Trägerplatte und einer Kühlplatte der Leistungselektronik.

Erfindungsgemäß wird ferner eine Ladestation zum Laden eines Elektrofahrzeugs bereitgestellt, wobei die Ladestation die hierin beschriebene Entfeuchter-Einrichtung aufweist. Dabei ist der Ablauf der Entfeuchter-Einrichtung fluidtechnisch, etwa mittels eines Schlauchs oder einer Rohrleitung, mit einem Ausgang gekoppelt, welcher zum Ausleiten des Kondensats aus der Ladestation dient und bevorzugt in einem Sockelbereich der Ladestation angeordnet ist. Unter dem Sockelbereich der Ladestation kann ein erdnaher Bereich der Ladestation gemeint sein, insbesondere die Aufstandsfläche der Ladestation auf dem Boden. Bevorzugt kann also das abgeleitete Kondenswasser in das umgebende Erdreich abgegeben werden, sodass der Benutzer der Ladestation nicht durch Pfützen irritiert wird. Ferner kann hier die Gravitationswirkung ausgenutzt werden, um das entstandene Kondensat aus dem Auffangbehälter zum Ablauf zu leiten. Generell kann jedoch die primäre Zielsetzung der erfindungsgemäßen Ladestation darin bestehen, das in der Entfeuchter-Einrichtung entstandene Kondensat aus der Ladestation herauszuleiten.

Um für eine optimale Entfeuchtung des Inneren der Ladestation zu sorgen, können bevorzugt die sich im Inneren der Ladestation befindenden Komponenten gegenüber der Umwelt isoliert sein, sodass im Inneren der Ladestation ein Mikroklima entsteht. Dadurch kann erreicht werden, dass mehr Feuchte nach außen abgegeben wird als von außen (also aus der Umwelt) nachströmt, so dass der Innenraum der Ladestation effektiv entfeuchtet wird.

Durch das Bereitstellen der Entfeuchter-Einrichtung in der Ladestation kann das Innere der Ladestation entfeuchtet werden und so Korrosion bestmöglich vermieden werden. Ferner kann auch der Entstehung von Kurzschlüssen an den verschiedensten Komponenten innerhalb der Ladestation vorgebeugt werden.

Gemäß weiteren Ausführungsformen der Ladestation kann der Ablauf der Entfeuchter-Einrichtung über einem Lüfter der Ladestation angeordnet sein oder mittels einer fluidtechnischen Verbindung (z.B. Schlauch oder Rohrleitung) zu einem Bereich über dem Lüfter der Ladestation befördert werden, so dass im Betrieb der Ladestation das durch den Ablauf hindurchfließende Kondensat auf den Lüfter abgegeben (geträufelt) wird. Bei dieser Ausführungsform kann das der Luft entzogene Wasser mit dem Luftstrom des Lüfters nach außen befördert werden. Vorteilhaft ist dabei, dass der Luftstrom üblicherweise sehr warm ist (ca. 60°C) und folglich das Wasser schnell verdunstet. Bei einer solchen Ausführungsform kann gegebenenfalls eine Pumpe verwendet werden, falls der entsprechende Lüfter oberhalb der Entfeuchter-Einrichtung angeordnet ist.

Gemäß weiteren Ausführungsformen der Ladestation kann die Entfeuchter-Einrichtung in einem oberen Bereich der Ladestation angeordnet sein. Unter einem oberen Bereich der Ladestation kann das obere Drittel oder das obere Viertel des Innenraums der Ladestation gemeint sein. Eine solche Ausführungsform kann bevorzugt sein, falls im Inneren der Ladestation wassergefährdende Stoffe, beispielsweise Glykol, verwendet werden, um die Distanz der Entfeuchter-Einrichtung zu Leitungen, durch welche wassergefährdende Stoffe fließen, zu maximieren. Generell kann bei Verwendung von wassergefährdenden Stoffen die Entfeuchte-Einrichtung derart angeordnet bzw. derart abgeschirmt werden, dass bei möglichen Leckagen der Wasser/Glykol führenden Leitungen kein Glykol in die Entfeuchter-Einrichtung gelangt und so in die Umwelt abgeführt wird. Zusätzlich kann ein Abscheider verwendet werden, um zu verhindern, dass wassergefährdende Stoffe mit dem abgeführten Kondensat nach außen gelangen.

Gemäß weiteren Ausführungsformen der Ladestation kann der Lüfter der Entfeuchter-Einrichtung einen Luftzufuhranschluss aufweisen, an den ein Schlauch ankoppelbar ist. Durch Ankoppeln eines Schlauchs an den Luftzufuhranschluss kann die Luft beispielsweise von dort eingesammelt werden, wo eine hohe Luftfeuchte zu erwarten ist, sodass der Innenraum der Ladestation besser/zuverlässiger entfeuchtet werden kann. Zudem kann so eine gezielte Luftströmung innerhalb der Ladestation erreicht werden.

Gemäß weiteren Ausführungsformen der Ladestation kann das an der Trägerplatte anliegende Wärmeleitpad an einer Kühlplatte eines Leistungselektronikmoduls der Ladestation anliegen. Mit anderen Worten kann die Warmseite des elektrothermischen Wandler-Elements über die Trägerplatte und das daran angebrachte Wärmeleitpad an eine in der Ladestation bereits vorhandene Kühlplatte thermisch gekoppelt sein, um die Wärme der Warmseite abzuführen. Dadurch kann ein größerer Wärmefluss erreicht werden, welcher die Kühlleistung verbessert, da der Temperaturunterschied zwischen der Kaltseite und der Warmseite größer ist und sich zudem schneller einstellen kann.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und den beiliegenden Zeichnungen.
Figur 1 zeigt einen schematischen Aufbau einer beispielhaften Entfeuchter-Einrichtung.
Figur 2 zeigt ein Ausführungsbeispiel der Entfeuchter-Einrichtung.
Figur 3 zeigt ein Ausführungsbeispiel der Entfeuchter-Einrichtung mit Lüfter.
Figur 4 zeigt ein Ausführungsbeispiel einer Ladestation, in welcher die Entfeuchter-Einrichtung angeordnet ist.

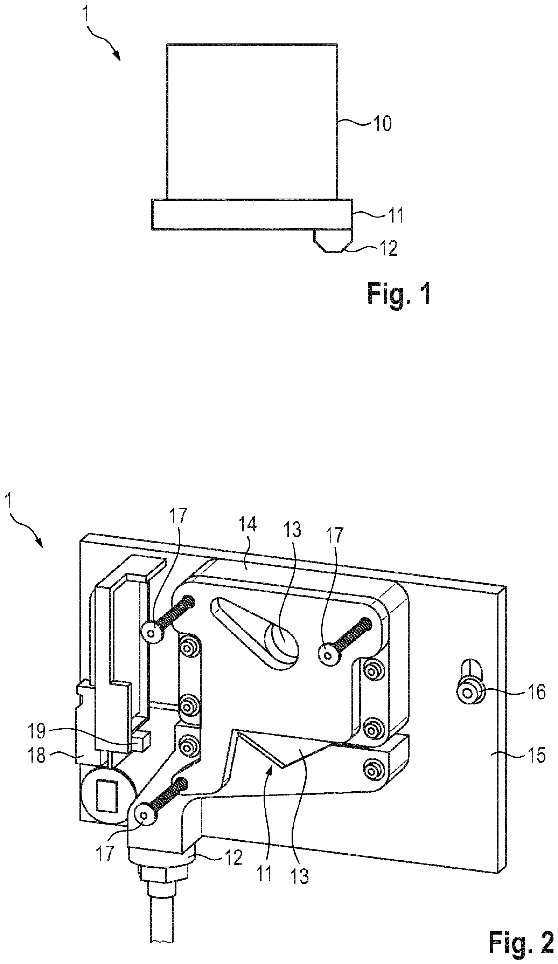

In Figur 1 ist ein schematischer Aufbau einer beispielhaften Entfeuchter-Einrichtung 1 dargestellt. Diese weist ein elektrothermisches Wandler-Element 10, bevorzugt ein Peltier-Element, und einen Auffangbehälter 11 auf, welcher unterhalb des elektrothermischen Wandler-Elements 10 angeordnet ist zum Auffangen von sich daran bildenden Kondensats. Der Auffangbehälter 11 weist einen Ablauf 12 auf, durch den das im Auffangbehälter 11 aufgefangene Kondensat aus der Entfeuchter-Einrichtung 1 herausgeleitet werden kann. Der Auffangbehälter 11 kann insbesondere derart beschaffen und angeordnet sein, dass das sich an der Kaltseite des Wandler-Elements 10 bildende Kondensat darin aufgefangen werden kann. Bei der Kaltseite kann es sich direkt um die im Betrieb der Entfeuchter-Einrichtung 1 erkaltete Oberfläche des elektrothermischen Wandler-Elements 10 oder aber auch um einen auf der Kaltseite angebrachten und damit wärmeleitend gekoppelten Kondensationskörper handeln.

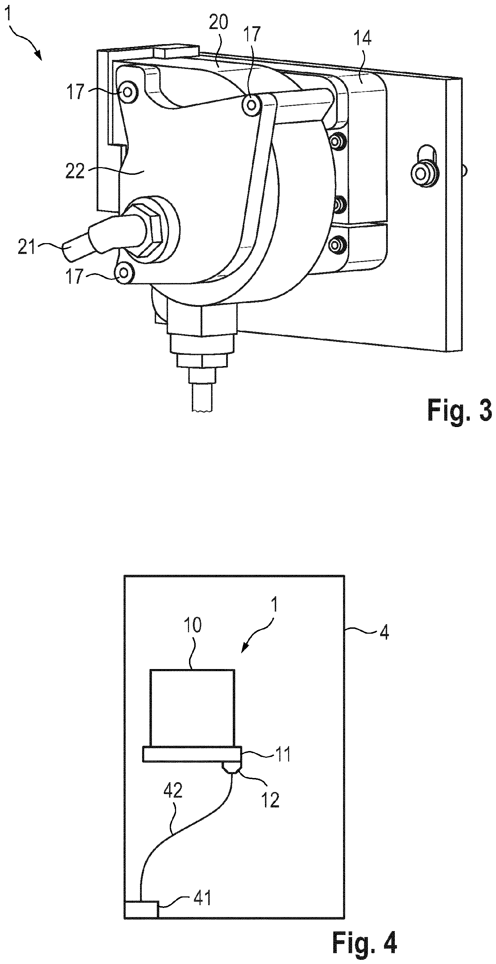

Figur 2 zeigt ein konkretes bauteilmäßiges Ausführungsbeispiel der Entfeuchter-Einrichtung 1. Die Entfeuchter-Einrichtung 1 ist auf einer Trägerplatte 15 aufgebaut, auf der unter anderem ein Gehäuse 14 sowie weitere Komponenten angeordnet sind. In dem Gehäuse 14 ist ein Halterahmen angeordnet zum Kontaktieren der elektrischen Kontakte des in oder an dem Halterahmen angeordneten elektrothermischen Wandler-Elements. Bei dem in Figur 2 dargestellten Ausführungsbeispiel der Entfeuchter-Einrichtung 1 ist auf der Kaltseite des elektrothermischen Wandler-Elements ein Kondensationskörper 13 angeordnet, welcher durch die rückseitigen Öffnungen des Gehäuses 14 zu sehen ist. Hierbei weist der Kondensationskörper 13 eine dreidimensionale Oberflächenstruktur in Form einer stäbchen- oder kegelförmigen Struktur auf zur Vergrößerung seiner Oberfläche. Unter dem Kondensationskörper 13 befindet sich im unteren Teil des Gehäuses 14 (oder als gesondertes Bauteil unter dem Gehäuse 14) der Auffangbehälter 11 zum Auffangen des sich an der kalten Oberfläche des Kondensationskörpers 13 bildenden Kondensats. Das Kondensat kann schließlich über den Ablauf 12 aus der Entfeuchter-Einrichtung 1 abgeführt werden. Die Trägerplatte 15 kann mittels einer ersten Schraube 16 (wobei selbstverständlich mehr erste Schrauben 16 verwendet werden können) an ein anderes Bauteil, etwa eine Kühlplatte der Leistungselektronik oder eine Innenwand innerhalb einer Ladestation angebracht werden. Das Gehäuse 14 ist mittels Schrauben an die Trägerplatte 15 befestigt. Es sind ferner zweite Schrauben 17 dargestellt, welche zur optionalen Befestigung eines Lüfters (siehe Figur 3) am Gehäuse 14 dienen. Ferner ist ein Steckverbinder 18 vorgesehen, welcher mit entsprechenden Kontakten in dem Halterahmen im Gehäuse 14 elektrisch gekoppelt ist und somit zur Energiebereitstellung für das elektrothermische Wandler-Element dient. Der dargestellte Innenkontakt 19 entspricht einem Kontakt einer weiteren Steckverbindung zur elektrischen Ankontaktierung des Lüfters.

In Figur 3 ist das in Figur 2 dargestellte Ausführungsbeispiel der Entfeuchter-Einrichtung 1 dargestellt. Hier ist zusätzlich ein Lüfter 20 an das Gehäuse 14 angebracht, im gezeigten Beispiel mittels der zweiten Schrauben 17. Dem Lüfter 20 ist ferner eine optionale Abdeckung 22 vorgeschaltet (d.h. im Lufteinzugsbereich des Lüfters angeordnet), in welcher ein Luftzufuhr-Anschluss 21 vorgesehen ist. An den Luftzufuhr-Anschluss 21 kann ein Schlauch angeschlossen werden, um Luft aus mindestens einem vorbestimmten Bereich der Ladestation anzusaugen. Der an den Luftzufuhr-Anschluss 21 angeschlossene Schlauch kann mehrere Luftzufuhr-Öffnungen aufweisen.

In Figur 4 ist ein Ausführungsbeispiel einer Ladestation 4 veranschaulicht, in welcher die Entfeuchter-Einrichtung 1 angeordnet ist. Der Ablauf 12 der Entfeuchter-Einrichtung 1 ist mittels eines Schlauchs bzw. einer Rohrleitung 42 fluidisch mit einem Ausgang 41 der Ladestation 4 verbunden. Der Ausgang 41 befindet sich hierbei bevorzugt im Sockelbereich der Ladestation 4. Dadurch kann das aufgefangene Kondensat in das umgebende Erdreich abgeleitet werden, ohne Pfützen um die Ladestation 4 herum zu bilden. Zudem wird das Kondensat aus dem Auffangbehälter 11 gravitativ zum Ausgang 41 befördert, sodass für diesen Vorgang keine Energie benötigt wird.

Alternativ zu der in Figur 4 dargestellten Entsorgungsvariante des Kondensats kann dieses über einem in der Ladestation 4 vorgesehenen Lüfter abgegeben werden bzw. darauf geträufelt werden. Bei dem Lüfter kann es sich bevorzugt um einen solchen handeln, dessen Luftstrom nach außen führt, also aus der Ladestation herausbefördert wird. Dazu kann beispielsweise entweder der Ablauf 12 der Entfeuchter-Einrichtung 1 über einem solchen Lüfter angeordnet sein, insbesondere dann, wenn die Entfeuchter-Einrichtung oberhalb des Lüfters angeordnet ist. Alternativ, insbesondere dann, wenn die Entfeuchter-Einrichtung 1 unterhalb des Lüfters angeordnet ist, kann das Kondensat aus dem Ablauf 12 mittels der Rohrleitung 42 zu einem Bereich über dem Lüfter befördert werden, um das Kondensat auf den Lüfter abzuscheiden. Für das Hochpumpen des Kondensats kann eine Pumpe verwendet werden.

## Patentansprüche

1. Entfeuchter-Einrichtung (1), aufweisend:
ein elektrothermisches Wandler-Element (10);
einen Auffangbehälter (11), welcher unterhalb des elektrothermischen Wandler-Elements (10) angeordnet ist zum Auffangen von sich daran bildenden Kondensats, wobei der Auffangbehälter (11) einen Ablauf (12) aufweist, durch den das Kondensat aus dem Auffangbehälter (11) aus der Entfeuchter-Einrichtung (1) herausgeleitet werden kann.

2. Entfeuchter-Einrichtung (1) gemäß Anspruch 1, ferner aufweisend:
eine Trägerplatte (15), auf welcher ein Halterahmen angeordnet ist, wobei das elektrothermische Wandler-Element (10) in den Halterahmen eingesetzt ist.

3. Entfeuchter-Einrichtung (1) gemäß Anspruch 2,
wobei die Oberfläche des elektrothermischen Wandler-Elements (10), welche der Trägerplatte (15) abgewendet ist, eine dreidimensional strukturierte Oberfläche aufweist.

4. Entfeuchter-Einrichtung (1) gemäß einem der Ansprüche 1 bis 3, ferner aufweisend:
einen Lüfter (20), welcher derart angeordnet ist, dass im Betrieb der Entfeuchter-Einrichtung (1) ein von diesem erzeugter Luftstrom die von der Trägerplatte (15) abgewendete Oberfläche des elektrothermischen Wandler-Elements (10) anbläst.

5. Entfeuchter-Einrichtung (1) gemäß einem der Ansprüche 2 bis 4, sofern rückbezogen auf Anspruch 2, ferner aufweisend:
ein Wärmeleitpad, welches im Bereich des elektrothermischen Wandler-Elements (10) auf einer diesem abgewandten Oberfläche der Trägerplatte (15) angeordnet ist.

6. Ladestation (4) zum Laden eines Elektrofahrzeugs,
wobei die Ladestation (4) eine Entfeuchter-Einrichtung (1) gemäß einem der Ansprüche 1 bis 5 aufweist;
wobei der Ablauf (12) der Entfeuchter-Einrichtung (1) fluidtechnisch mit einem Ausgang (41) gekoppelt ist, welcher zum Ausleiten des Kondensats aus der Ladestation (4) eingerichtet ist und bevorzugt in einem Sockelbereich der Ladestation (4) angeordnet ist.

7. Ladestation (4) zum Laden eines Elektrofahrzeugs,
wobei die Ladestation (4) eine Entfeuchter-Einrichtung (1) gemäß einem der Ansprüche 1 bis 5 aufweist;
wobei der Ablauf (12) der Entfeuchter-Einrichtung (1) über einem Lüfter der Ladestation (4) angeordnet ist oder mittels einer fluidtechnischen Verbindung (42) zu einem Bereich über einem Lüfter der Ladestation befördert wird, so dass im Betrieb der Ladestation (4) das durch den Ablauf (12) hindurchfließende Kondensat auf den Lüfter abgeschieden wird.

8. Ladestation (4) gemäß Anspruch 6 oder 7,
wobei die Entfeuchter-Einrichtung (1) in einem oberen Bereich der Ladestation (4) angeordnet ist.

9. Ladestation (4) gemäß einem der Ansprüche 6 bis 8, aufweisend die Entfeuchter-Einrichtung (1) gemäß Anspruch 4,
wobei der Lüfter der Entfeuchter-Einrichtung (1) einen Luftzufuhr-Anschluss (21) aufweist, an den ein Schlauch ankoppelbar ist.

10. Ladestation (4) gemäß einem der Ansprüche 6 bis 9, aufweisend die Entfeuchter-Einrichtung (1) gemäß Anspruch 5,
wobei die Trägerplatte (15) mit dem Wärmeleitpad an einer Kühlplatte eines Leistungselektronikmoduls der Ladestation (4) anliegt.
